# FASCICULE DE BREVET EUROPEEN

(11) **EP 0 719 177 B1**
(45) Date de publication et mention de la délivrance du brevet: **29.12.1997**
(21) Numéro de dépôt: 94926968.2
(22) Date de dépôt: 08.09.1994
(51) Int. Cl.: B01J 20/20, B01J 37/08, C04B 38/00, F27B 7/20

(54) **MATIERE GRANULAIRE POREUSE OBTENUE A PARTIR D'EAUX DE LAVAGE DE LA LAINE, PROCEDE POUR SA FABRICATION ET SES APPLICATIONS**
PORÖSES KÖRNIGES MATERIAL AUS WASCHWASSERN VON WOLLE VERFAHREN ZUR HERSTELLUNG UND VERWENDUNGEN
POROUS GRANULAR MATERIAL OBTAINED FROM WOOL SCOURING LIQUOR, METHOD FOR THE MANUFACTURE THEREOF AND APPLICATIONS

(30) Priorité: 13.09.1993 FR 9310844
(43) Date de publication de la demande: 03.07.1996
(73) Titulaire: PEIGNAGE AMEDEE, 59100 Roubaix (FR)
(72) Inventeur: LEMAN, Bernard, F-59100 Roubaix 3 (FR)
(74) Mandataire: Lhuillier, René
(86) Numéro de dépôt international: FR9401061
(87) Numéro de publication internationale: WO9507753

(56) Documents cités:
- EP-A- 0 398 298
- BE-A- 899 849
- DE-A- 3 918 717
- FR-A- 709 860
- FR-A- 1 457 472
- FR-A- 2 461 687
- GB-A- 2 140 790
- US-A- 2 069 164

## Description

L'invention concerne la valorisation des résidus obtenus après dépollution des eaux de lavage de la laine.

Elle a plus particulièrement pour objet une matière granulaire poreuse qui peut être utilisée notamment comme produit absorbant et comme support de catalyseur, par exemple en pétrochimie, en particulier pour l'adoucissement des essences.

L'invention a également pour objets un procédé pour la fabrication de cette matière granulaire poreuse et les applications de cette matière.

La laine brute obtenue après la tonte des moutons contient des matières étrangères telles que de la graisse de laine (mélange d'esters d'alcools et d'acides gras, insoluble dans l'eau), du suint (mélange de sels organiques de potassium hydrosolubles), de la terre, du sable etc... Cette laine est lavée à l'eau pour en éliminer ces impuretés. Après évaporation de l'eau de lavage, on obtient une masse graisseuse et terreuse.

La Demanderesse a eu, dans un premier temps, l'idée de valoriser les eaux de lavage de la laine en les concentrant à environ 70 % de matières sèches par évaporation et thermocompression puis de pyrolyser entre 400 et 600°C la boue ainsi obtenue dans un four tournant, à contre-courant de gaz chauds. Elle obtient ainsi, d'une part, essentiellement une matière minérale sous forme de cendres constituées d'environ 70 % de granulés et d'environ 30 % de fines poussières et, d'autre part, par passage des gaz de pyrolyse dans une chaudière, de la vapeur d'eau haute pression utilisée pour produire de l'électricité.

La matière minérale en question, composée essentiellement de carbone, de sels de potassium solubles dans l'eau, de sels de potassium insolubles dans l'eau, de silicates et de silice est utilisée, sous forme pulvérulente (granulés et fines poussières), en agriculture, comme fertilisant.

Les granulés sont également utilisés comme supports de catalyseurs, notamment pour l'adoucissement des essences, ou directement pour désodoriser ou décolorer des liquides.

On a cependant constaté que la matière granulaire poreuse obtenue à l'issue de cette première pyrolyse a des performances très irrégulières et présente, dans certaines applications, des inconvénients tels que résistance insuffisante à l'écrasement et tendance à se déliter en présence d'eau.

La Demanderesse a donc poursuivi ses recherches en vue d'améliorer cette matière granulaire. Elle a ainsi trouvé que grâce à une seconde pyrolyse, effectuée à des températures de 700 à 950°C, notamment de 700 à 800°C, de préférence de 700 à 750°C en atmosphère non oxydante, il était possible d'obtenir, de façon reproductible, une matière granulaire poreuse qui non seulement présente une très bonne résistance à l'écrasement et ne se délite pas en présence d'eau, mais présente également une surface spécifique beaucoup plus importante que les granulés issus de la première pyrolyse, avec prédominance de la microporosité au détriment de la macroporosité. Ces nouveaux granulés qui peuvent être obtenus soit par broyage, compactage et granulation, suivis d'une seconde pyrolyse, de la matière minérale obtenue après la première pyrolyse, soit par une seconde pyrolyse directe de granulés de première pyrolyse présentant une granulométrie dans la gamme d'environ 1 à 5 mm, sont en outre capables de fixer, par absorption ou adsorption, des quantités nettement plus importantes de produits tels que des catalyseurs.

Plus précisément, selon l'un de ses aspects, l'invention a pour objet une matière granulaire poreuse comprenant du carbone, de la silice, des sels minéraux solubles dans l'eau et des sels minéraux insolubles dans l'eau, caractérisée en ce qu'elle ne se délite pas en présence d'eau et présente :
- une granulométrie dans la gamme d'environ 1 à 5 mm ;
- une résistance à l'écrasement, ou résistance mécanique, dans la gamme de 0,75 à 1 MPa ;
- une densité comprise entre 0,7 et 0,8 ;
- une surface spécifique BET comprise entre 100 et 200 m²/g ;
- un volume microporeux compris entre 0,25 et 1 cm³/g ; et
- une teneur en carbone de 8 à 11 % en poids, le complément étant essentiellement constitué d'une matrice minérale à caractère basique, comprenant une phase cristalline d'aluminosilicates insolubles.

Dans le cadre de la présente invention, on considère que la microporosité est constituée par des pores inférieurs ou égaux à 18.10⁻¹⁰ m (18 Å) et la macroporosité est constituée par des pores supérieurs ou égaux à 200.10⁻¹⁰ m (200 Å).

La matière granulaire poreuse selon l'invention présente une granulométrie au moins égale à environ 1 mm. Au cours de sa fabrication qui sera décrite plus loin, si on tentait de travailler avec une granulométrie inférieure à environ 1 mm, on obtiendrait une boue et non pas une matière granulaire. La granulométrie est de préférence dans la gamme de 1 à 3 mm et est avantageusement de 1 à 2 mm. Dans tous les cas, cette matière granulaire contient essentiellement les éléments suivants : carbone, silicium, oxygène, sodium, potassium, magnésium, calcium, aluminium et fer. Elle présente une forte teneur en silice, en général de l'ordre de 45 % en poids.

Elle est constituée d'une forte proportion de grains noirs qui comprennent du carbone, de la silice essentiellement sous forme de quartz, des silicates tels que le silicate de magnésium et de potassium de formule K₂MgSi₃O₈ et des aluminosilicates de type feldspaths alcalins tels que l'aluminosilicate de sodium de formule NaAlSi₃O₈ et l'aluminosilicate de potassium ou gismondine, de formule KAlSi₃O₈, ou de type feldspathoïdes, moins riches en silice que les feldspaths, tels que la kaliophilite de formule KAlSiO₄ ou la kalsilite de formule voisine. Cette matière granulaire poreuse comprend en outre des grains blancs essentiellement constitués de silice, principalement sous forme de quartz.

La présence d'aluminosilicates dans la matière granulaire poreuse selon l'invention semble due à un réarrangement plus ou moins ordonné des cations alcalins avec les ions silicium et aluminium présents dans la matière de départ, réarrangement qui transforme en partie les silicates solubles en aluminosilicates insolubles.

Les granulés obtenus selon l'art antérieur contiennent déjà une certaine proportion d'aluminosilicates, notamment de gismondine et de kaliophilite. La seconde pyrolyse qui conduit à la matière granulaire poreuse selon la présente invention, modifie les proportions de ces aluminosilicates et augmente favorablement la basicité de la matière granulaire selon l'invention, par rapport à la matière granulaire connue de première pyrolyse. De plus, la présence accrue de feldspathoïdes tels que la kaliophilite augmente la cristallinité du produit, favorisant ainsi sa résistance à l'écrasement.

Pour certaines applications, en particulier lorsqu'elle est utilisée telle quelle ou comme support de catalyseur dans des applications de catalyse basique, par exemple pour l'adoucissement de coupes pétrolières acides, la matière granulaire poreuse selon l'invention présente de préférence un pH, mesuré sur les eaux de lavage, supérieur à 11.

La résistance à l'écrasement, ou résistance mécanique, est plus généralement comprise entre 0,75 et 0,95 MPa.

La surface spécifique BET est avantageusement comprise entre 160 et 200 m²/g.

Selon un mode avantageux de réalisation, l'invention a pour objet une matière granulaire poreuse comprenant du carbone, de la silice, des sels minéraux solubles dans l'eau et des sels minéraux insolubles dans l'eau, caractérisée en ce qu'elle ne se délite pas dans l'eau et présente :
- une granulométrie dans la gamme de 1 à 3 mm, de préférence de 1 à 2 mm ;
- une résistance à l'écrasement, ou résistance mécanique, comprise entre 0,75 et 0,95 MPa ;
- une densité comprise entre 0,7 et 0,8 ;
- une surface spécifique BET comprise entre 160 et 200 m²/g ;
- un volume microporeux compris entre 0,25 et 1 cm³/g :
- une teneur en carbone de 8 à 11 % en poids, le complément étant essentiellement constitué d'une matrice minérale à caractère basique, comprenant une phase cristalline d'aluminosilicates insolubles ; et
- un pH, mesuré sur les eaux de lavage, supérieur à 11.

Selon un autre de ses aspects, l'invention a pour objet un procédé pour la fabrication de la matière granulaire poreuse selon l'invention, caractérisé en ce qu'il comprend essentiellement les étapes consistant à :
1. se procurer une matière essentiellement minérale, ayant ou non une granulométrie dans la gamme d'environ 1 à 5 mm, de préférence dans la gamme de 1 à 3 mm, avantageusement de 1 à 2 mm, et obtenue par concentration d'eaux de lavage de la laine jusqu'à une teneur en matière sèche d'environ 70 %, pyrolyse du concentrat résultant à une température comprise entre 400 et 600°C, à l'abri de l'air et refroidissement ;
2. soumettre si nécessaire cette matière à des opérations de broyage, compactage, granulation et tamisage pour disposer de granulés ayant une granulométrie dans la gamme d'environ 1 à 5 mm, de préférence dans la gamme de 1 à
3 mm, avantageusement de 1 à 2 mm ; 3. soumettre la matière essentiellement minérale de départ avec une granulométrie dans la gamme d'environ 1 à 5 mm, de préférence dans la gamme de 1 à 3 mm, avantageusement de 1 à 2 mm, ou les granulés obtenus à l'étape 2. à une seconde pyrolyse, sous atmosphère non oxydante, à une température qui est portée progressivement d'une valeur dans la gamme de 250 à 350°C à une valeur dans la gamme de 700 à 950°C, pendant une durée totale de 15 à 60 minutes ; et
4. refroidir les granulés ainsi obtenus à l'abri de l'air et dans des conditions telles qu'ils ne subissent pas de choc thermique.

On entend ici par "matière essentiellement minérale", une matière sous forme dispersée qui, suivant la granulométrie des particules qui la composent, consiste en des granulés, une poudre ou un mélange de granulés et de poudre. Cette matière, fabriquée par la Demanderesse, est, comme il est indiqué plus haut, déjà utilisée, notamment comme fertilisant. Les étapes essentielles de sa fabrication sont représentées sous forme de diagramme dans le document SPRINT RA089 de mai 1992, intitulé "Gestion de l'eau et traitement des effluents dans l'industrie de lavage de la laine brute". Des précisions supplémentaires en ce qui concerne un mode d'obtention de la "matière essentiellement minérale" utilisée selon l'invention sont données ci-après.

De l'eau de lavage de la laine qui contient de la graisse de laine, du suint, de la terre et du sable est soumise à une évaporation primaire en plusieurs étapes qui amène sa concentration en matière sèche à environ 50 % en poids. Pour ce faire, on peut utiliser des évaporateurs constitués d'un faisceau de tubes à l'intérieur duquel circule la liqueur à évaporer et d'un séparateur dans lequel s'effectue la séparation entre la liqueur et les buées d'évaporation qui contiennent, outre de la vapeur d'eau, des produits volatils tels que de l'ammoniac, des amines et des alcools gras.

Le faisceau de tubes est chauffé à l'extérieur par de la vapeur d'eau ou des buées recomprimées qui, en se condensant, transmettent leur chaleur latente de vaporisation à la liqueur à évaporer qui descend en film mince à l'intérieur des tubes.

Le concentrat ainsi obtenu est ensuite soumis à une évaporation secondaire dans des évaporateurs à circulation forcée dont il remplit le faisceau de tubes. Le concentrat ou liqueur est chauffé tout au long des tubes et l'évaporation se fait par détente à la sortie du faisceau de tubes. A l'issue de cette évaporation secondaire, on obtient une boue ayant une concentration en matière sèche d'environ 70 % en poids.

Pour la conduite de l'évaporation, on utilise le retard à l'ébullition qui est défini comme étant la différence entre la température d'ébullition d'un liquide et la température d'ébullition de l'eau dans les mêmes conditions. Le retard à l'ébullition est déterminé par la concentration en matières minérales et organiques solubles du liquide en ébullition. Il est mesuré en pratique par la différence de température existant entre le liquide en ébullition et la vapeur d'eau qui le surmonte. De ce fait, il permet à l'opérateur d'estimer la teneur en matières sèches du concentrat obtenu.

Le concentrat obtenu à l'issue de l'évaporation secondaire est constitué de :
- matières organiques (suint et suintine) : environ 25 % ;
- eau : environ 30 à 35 % ; et
- matières minérales, terres, potasse, soude etc. : complément à 100 %.

Ce concentrat est acheminé vers un pyrolyseur qui peut être constitué d'un four rotatif, d'un four à étages de type NICHOLS-HERRESHOFF ou d'un four à soles tournantes de type NICHOLS. La pyrolyse y est effectuée à des températures comprises entre 400 et 600°C. Elle permet de transformer le concentrat par évaporation de l'eau et des matières organiques légères, cracking thermique des matières organiques lourdes, ramollissement des sels minéraux à bas point de fusion, enrobage des sels fondus par les terres et granulation de la matière minérale. Les températures requises sont maintenues dans le four par circulation à contre-courant des gaz issus d'un générateur de gaz chauds (utilisant par exemple du gaz naturel) et des gaz de pyrolyse recyclés. La matière essentiellement minérale sortant du pyrolyseur est ensuite refroidie, par exemple dans un refroidisseur rotatif tubulaire, balayé à contre-courant par de l'air froid à l'intérieur et de l'eau à l'extérieur, puis récupérée.

La matière essentiellement minérale qui peut être obtenue après cette première pyrolyse et qui est utilisée dans la mise en oeuvre du procédé selon l'invention contient du carbone, du suint, des sels, notamment de potassium, solubles dans l'eau, des sels, notamment de potassium, insolubles dans l'eau, des silicates et de la silice. Elle est en général constituée de grains ayant une granulométrie très ouverte, c'est-à-dire dans une large gamme d'environ 30 µm à 40 mm.

Lorsque l'on dispose d'une matière ayant une telle granulométrie très ouverte, avant de la soumettre à la deuxième pyrolyse à l'étape 3. selon l'invention, il est nécessaire de la traiter pour lui conférer la granulométrie requise.

Pour ce faire, on broie la matière de telle sorte que tous les grains présentent une granulométrie inférieure à 1mm puis on la soumet à un traitement de compactage pour la transformer en plaquettes haute densité qui sont ensuite transformées en granulés présentant les dimensions requises, à savoir une granulométrie dans la gamme d'environ 1 à 5 mm, de préférence de 1 à 3 mm, avantageusement de 1 à 2 mm.

Afin d'améliorer la porosité du produit final, c'est-à-dire la matière granulaire poreuse selon l'invention, on peut, lors du compactage, ajouter un additif tel que du brai de pétrole ou de houille, en une proportion de 5 à 10 % en poids, par rapport au poids de la poudre obtenue à l'issue du broyage.

De plus, pour modifier les caractéristiques du produit final telles que son aptitude à présenter des sites favorables aux actions de catalyse mises en jeu dans certaines réactions de processus industriels pétroliers ou chimiques, on peut également ajouter, lors du compactage, des boues contenant des métaux tels que le fer, le cuivre, le titane, le vanadium et le nickel, ou des sels de tels métaux, sous forme d'une poudre de granulométrie adaptée.

Les traitements éventuels de l'étape 2. permettent donc non seulement d'obtenir des granulés présentant la granulométrie requise mais encore d'introduire des ajouts destinés à modifier les caractéristiques du produit final.

Lorsque l'on dispose d'une matière de première pyrolyse constituée uniquement de granulés ayant une granulométrie au moins égale à environ 1 mm, il n'est pas nécessaire de la soumettre aux traitements de broyage, compactage et granulation résumés ci-dessus. Elle peut être soumise directement, après tamisage éventuel pour disposer de grains ayant la taille requise, à la seconde pyrolyse de l'étape 3.

Les granulés ayant la dimension requise, résultant ou non des traitements de l'étape 2., sont ensuite soumis à une pyrolyse, sous atmosphère non oxydante, à une température qui est portée progressivement d'une valeur dans la gamme de 250 à 350°C à une valeur dans la gamme de 700 à 950°C pendant une durée totale de 15 à 60 minutes, dans un four. Ce four peut être un four du même type que celui utilisé pour pyrolyser le concentrat des eaux de lavage de la laine mais supportant des températures plus élevées. On utilise toutefois de préférence un four rotatif présentant des parois réfractaires.

Dans un four rotatif, la durée totale de la pyrolyse est en général de 15 à 30 minutes.

On peut toutefois également utiliser un four statique. La durée totale de la pyrolyse est alors en général de 40 à 60 minutes.

Les températures à l'entrée du four sont comprises entre 250 et 350°C environ et les températures à la sortie du four sont comprises entre 700 et 950°C environ.

Le maintien de ces températures dans le four est assuré par circulation à contre-courant de gaz chauds provenant d'un générateur de gaz alimenté par un brûleur, par exemple de gaz naturel.

L'atmosphère dans le four doit être non oxydante et est de préférence réductrice.

Pour assurer une atmosphère réductrice, on peut avantageusement mélanger, dans le générateur de gaz, les gaz recyclés provenant de la pyrolyse avec les gaz fournis par le brûleur.

Les granulés pyrolysés sont ensuite refroidis à l'abri de l'air et dans des conditions telles qu'ils ne subissent pas de choc thermique, par exemple dans du sable fin dont ils sont ensuite séparés par tamisage ou, mieux encore, dans un tube à double enveloppe dans laquelle circule de l'eau froide (15 à 20°C environ), par exemple dans une vis à eau.

Pour obtenir la matière granulaire poreuse correspondant au mode avantageux de réalisation de l'invention décrit précédemment, la température de pyrolyse ne doit pas dépasser 750°C.

Par conséquent, selon un mode préféré de mise en oeuvre, le procédé selon l'invention défini ci-dessus est caractérisé en ce que la seconde pyrolyse est effectuée à une température qui est portée progressivement d'une valeur dans la gamme de 250 à 350°C, à une valeur dans la gamme de 700 à 750°C.

La matière granulaire poreuse selon l'invention, peut, en raison de ses caractéristiques physico-chimiques avantageuses, telles que notamment résistance a l'écrasement élevée, surface spécifique élevée et absence de délitement dans l'eau, être utilisée dans des applications nombreuses et variées dans lesquelles on utilise habituellement du charbon actif, souvent avec une efficacité moindre et/ou dans des conditions plus complexes.

En fait, cette matière se comporte comme un absorbant, présente la résistance d'un aluminosilicate et a une réactivité chimique de type basique.

Elle peut être utilisée telle quelle ou après lavage à l'eau pour en extraire les sels hydrosolubles, par exemple pour purifier, notamment pour désodoriser des liquides contenant des résidus phénoliques. Elle peut ainsi être utilisée par exemple pour désodoriser les condensats des eaux de lavage de la laine ou des condensats d'extraction par revaporisation au moyen de vapeur d'eau (stripping) des produits pétroliers.

Elle peut également être utilisée telle quelle comme catalyseur dans certaines réactions d'oxydation présentant une grande importance industrielle telles que le couplage oxydant du méthane qui est une réaction visant à transformer cet hydrocarbure, en présence d'oxygène, en hydrocarbures supérieurs, notamment en C₂. L'utilisation de la matière granulaire poreuse selon l'invention dans cette réaction conduit à la production d'éthylène (C₂H₄) et d'éthane (C₂H₆) avec un rapport éthylène/éthane très favorable par rapport aux autres catalyseurs habituellement utilisés dans cette réaction.

Elle peut encore être utilisée telle quelle comme support de catalyseur. Dans ce cas, on l'imprègne, selon les techniques habituelles bien connues de l'homme du métier, avec le catalyseur choisi qui peut être par exemple un sel de cobalt, pour éliminer les composés organiques sulfurés à l'origine d'odeurs désagréables, contenus notamment dans l'eau, ou une phtalocyanine, telle que la phtalocyanine de cobalt, pour neutraliser les acides gras libres, par exemple dans la graisse de laine ou suintine, pour la décolorer avant son traitement de valorisation.

La matière granulaire poreuse selon l'invention peut aussi être utilisée comme support de catalyseur dans différentes applications du domaine de la pétrochimie, après lavage à l'eau pour en extraire les sels minéraux solubles.

Ainsi, cette matière, après lavage à l'eau, peut être imprégnée par un chélate métallique, par exemple une phtalocyanine, à raison de 1 à 5 kg/m³, pour former un composite utilisable dans l'adoucissement des coupes pétrolières. La vitesse de passage des coupes pétrolières à adoucir est considérablement augmentée par rapport aux composites de l'art antérieur, notamment par rapport à ceux réalisés avec la matière granulaire de départ (matière granulaire de première pyrolyse), ce qui correspond à une augmentation importante de la productivité (voir l'exemple 8 de la partie expérimentale qui suit).

Elle peut en outre être soumise à un traitement de "purification" autre que le lavage à l'eau, destiné à la rendre utilisable dans des applications autres que celles mentionnées ci-dessus.

Ainsi, il peut être avantageux d'éliminer au moins en partie le carbone qu'elle contient pour obtenir une matière encore plus minérale, par exemple par calcination à des températures supérieures à 320°C.

Des exemples d'applications de la matière granulaire poreuse selon l'invention sont donnés à titre illustratif dans la partie expérimentale qui suit.

Les figures des dessins annexés représentent :

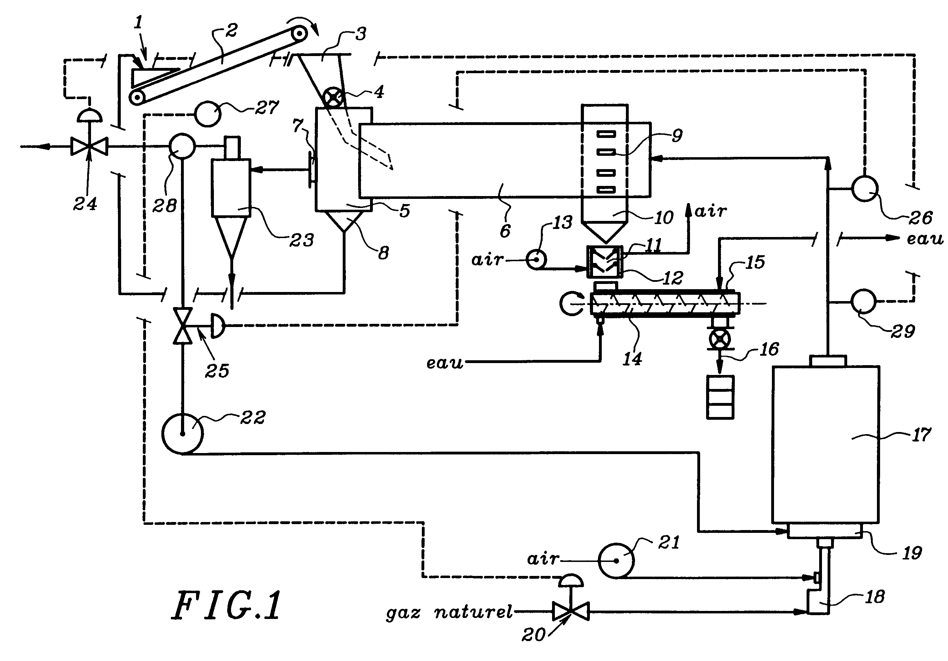

Figure 1 : le schéma de principe d'une unité de fabrication de la matière granulaire poreuse selon l'invention à partir du produit connu de première pyrolyse des eaux de lavage de la laine, en utilisant un pyrolyseur de type four rotatif.
Figure 2 : une vue en coupe verticale du four utilisé dans cette unité de fabrication.

Ces figures seront décrites dans la partie expérimentale qui suit, en relation avec un exemple de mise en oeuvre du procédé selon l'invention.

### PARTIE EXPERIMENTALE

### Exemple 1 : Fabrication de la matière granulaire poreuse selon l'invention

La matière de départ provenant de la première pyrolyse des eaux de lavage de la laine et dont la fabrication a été décrite précédemment est amenée par broyage à une granulométrie inférieure à 1 mm. Elle peut à ce stade être mélangée avec des fines recyclées, obtenues par filtration cyclonique des gaz issus de la première pyrolyse. Le mélange est ensuite acheminé vers une unité constituée d'une unité de préparation pour le pesage des composants (mélange précédent et fines inférieures à 1 mm, recyclées après la granulation) et d'une unité de compactage qui transforme les matières pulvérulentes en plaquettes haute densité. L'agglomération des particules est assurée par la pression exercée par un système hydraulique sur les roues mouleuses du compacteur. Dans cet exemple, la largeur d'une roue mouleuse est de 14,5 cm et la pression exercée est de l'ordre de 7.10⁴ à 8.10⁴ N (7 à 8 tonnes) par cm de largeur de roue.

Un dimensionnement correct du compacteur, notamment de ses roues, permet d'atteindre un rendement de compactage de 100 %.

Les plaquettes haute densité sont ensuite transformées, dans une unité de granulation, en granulés aux dimensions requises, à savoir 1 à 2 mm dans le cas présent. Le rendement de granulation est de l'ordre de 30 %. Pour une granulométrie de 1 à 3 mm, il serait de l'ordre de 50 %.

Après le tamisage, les granulés supérieurs à 2 mm sont recyclés vers le granulateur et les fines inférieures à 1 mm sont recyclées vers l'unité de compactage.

Les granulés de 1 à 2 mm 1 sont distribués sur un tapis transporteur 2 à raison de 100 kg/h puis chargés dans une trémie 3 équipée à sa base d'un sas alvéolaire ou écluse rotative 4. Ils sont ainsi chargés régulièrement, par l'intermédiaire d'un caisson 5, dans un four tubulaire rotatif 6 dans lequel ils circulent à contre-courant de gaz chauds, fortement appauvris en oxygène. A la sortie du four 6, ces gaz traversent le caisson 5 et en sortent en 7, tandis que les granulés en excès sont extraits au moyen de la trémie inférieure 8 du caisson 5 pour être recyclés.

A l'entrée du four 6, les granulés 1 sont soumis à une température de 250 à 350°C et à sa sortie, à une température de 700 à 750°C. Le temps de séjour des granulés dans le four est d'environ 30 minutes.

Les granulés sortent du four 6 par l'intermédiaire d'un ensemble de lumières 9 et d'un cône de sortie 10. Ils traversent un double sas de sortie 11 refroidi par une double enveloppe 12 dans laquelle circule de l'air de refroidissement à un débit de 350 m³/h (normaux) à 10°C, fourni par un ventilateur 13.

Les granulés sont ensuite introduits dans une vis sans fin 14 ayant une longueur de 5 m et un diamètre de 18 cm, refroidie par une double enveloppe 15 ayant un espace annulaire de 4 mm, dans laquelle circule de l'eau à 15°C, sous 5,5 bars, à un débit de 7,2 m³/h. Les granulés sont ainsi refroidis par conduction jusqu'à une température de 60 à 70°C et sont extraits en 16 de la vis sans fin 14, à cette température, à raison de 95 kg/h environ. L'eau sort de la double enveloppe à environ 18°C.

Les gaz utilisés dans le four 6 proviennent de la sortie basse d'un générateur de gaz 17 (représenté de façon schématique à l'envers, dans un but de simplification) alimenté dans sa partie haute en gaz de combustion de gaz naturel provenant d'un brûleur 18 et partiellement refroidis par mélange avec les gaz de pyrolyse recyclés introduits dans un distributeur de gaz recyclés 19. Le gaz naturel est injecté dans le brûleur 18, au moyen d'une vanne de régulation 20, à un débit de 8 m³/h (normaux) et l'air de combustion, en faible excès, est injecté dans le brûleur 18 au moyen d'un ventilateur 21, à un débit de 105 m³/h (normaux). Les gaz de pyrolyse recyclés, à une température de 245°C, sont injectés dans le distributeur 19, au moyen d'un ventilateur 22, à un débit de 210 m³/h (normaux).

Les gaz issus du générateur 17 pénètrent dans le four tournant 6 à une température ajustable voisine de 800°C et échangent leur chaleur avec les parois en matière réfractaire du four et les granulés. Ces derniers se réchauffent jusqu'à 750°C, tandis que les gaz se refroidissent.

Les gaz qui sortent du four 6 par l'intermédiaire du caisson 5 sont chargés de poussières ou fines produites par l'érosion des granulés dans le four. Ils sont conduits, à 245°C et à un débit de 326 m³/h (normaux), dans un filtre cyclonique 23. Les gaz filtrés sont soit extraits de l'installation au moyen de la vanne de régulation 24, à 245°C et à un débit de 116 m³/h (normaux) pour être éventuellement utilisés dans la fabrication du produit de départ, soit recyclés par l'intermédiaire de la vanne de régulation 25 et du ventilateur 22 vers le générateur de gaz 17.

Cette unité peut fonctionner en automatique grâce à un ensemble de trois boucles de régulation et à un ensemble de sécurités principales et secondaires.

Les trois boucles de régulation sont essentiellement constituées comme suit. 1. Régulation de température des gaz chauds :

Les gaz issus du générateur 17 doivent avoir une température la plus constante possible autour d'une valeur de consigne fixée par l'opérateur (850°C dans le cas de cet exemple). On fait donc varier le débit de gaz recyclés en fonction de la température réelle mesurée sur les gaz à leur entrée dans le four 6. Cette boucle comprend donc :
- un thermocouple de mesure de la température des gaz 26 ;
- un régulateur proportionnel, non représenté, monté en salle de contrôle ; et
- une vanne de régulation 25 de débit des gaz recyclés.

### 2. Régulation de la charge thermique du four tournant :

On mesure la température de sortie des gaz, après le filtre cyclonique 23 (245°C dans cet exemple) et on corrige tout écart de mesure avec la valeur de consigne fixée par l'opérateur, par commande d'ouverture ou de fermeture des électrovannes du brûleur de gaz naturel 18. Cette boucle comprend donc :
- un thermocouple de mesure de la température (250-350°C) 27 ;
- un régulateur à trois seuils (contacts secs) 28 ; et
- trois électrovannes (non représentées) montées en parallèle sur le circuit de gaz naturel du brûleur.

### 3. Régulation de mise en dépression du générateur de gaz chauds :

Pour des raisons de sécurité, il est préférable de faire fonctionner le générateur de gaz chauds 17 sous une légère dépression. Pour cela on mesure la pression du foyer et on module le débit de gaz extraits de l'unité, jusqu'à obtention de valeurs les plus proches possibles des consignes fixées. Cette boucle comprend donc :
- un capteur de pression 29 monté sur le générateur 17 ;
- un régulateur proportionnel, non représenté, monté en salle de contrôle ; et
- un volet de réglage, ou vanne de régulation, 24 d'évacuation des gaz, avec servo-moteur pneumatique, monté sur le circuit d'évacuation des gaz.

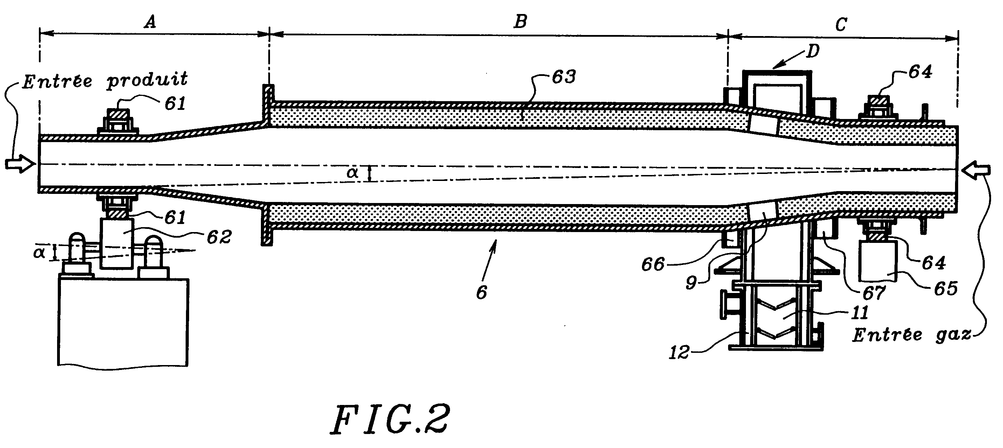

Le four tournant, horizontal, à chauffage direct 6, utilisé dans cet exemple est représenté à la figure 2. Il est constitué de trois tronçons A, B et C réunis par des brides et a une longueur totale de 6 m. Il est légèrement incliné, vers la sortie des granulés, par exemple d'un angle α d'environ 2° par rapport à l'horizontale.

Le tronçon A d'entrée du produit, en métal, est cylindro-conique. Il est muni, dans sa partie cylindrique, d'un bandage haut 61 qui repose sur quatre galets supports 62 entraînés par un moteur de mise en rotation sensiblement horizontale, non représenté.

Le tronçon B, dans lequel la pyrolyse proprement dite est effectuée, est également en métal et muni intérieurement d'un revêtement réfractaire 63, par exemple en briques couteaux de 11 cm.

Le troncon C est également en métal et est également muni intérieurement de revêtement réfractaire 63. Ce tronçon C comprend une partie conique munie de lumières 9 régulièrement réparties sur sa circonférence pour la sortie du produit pyrolysé et une partie cylindrique pour l'entrée des gaz de pyrolyse, munie d'un bandage bas 64 qui repose sur quatre galets supports 65.

La partie conique du tronçon C est entièrement englobée dans une enceinte D de forme annulaire, fixe par rapport à l'ensemble A, B, C en rotation qui constitue le four, et destinée à recevoir les granulés pyrolysés sortant par les lumières 9.

L'étanchéité entre l'enceinte D et le four 6 est assurée par des joints 66 et 67. La partie inférieure de l'enceinte D communique avec le double sas de sortie 11.

### Exemple 2 : Comparaison de la matière granulaire poreuse obtenue selon l'exemple 1 avec le produit de départ (granulés de 1ère pyrolyse).

| | GRANULÉS DE 1ère PYROLYSE | GRANULÉS DE L'EXEMPLE 1 |
|---|---|---|
| Résistance à l'écrasement | maximum 0,2 MPa | maximum 1 MPa |
| Imprégnation (fixation de phtalocyanine) (kg/m³ de granulés) | 2,5 à 3 | 3 à 4 |
| Surface spécifique | 30 m²/g | 200 m²/g |
| Volume microporeux (cm³/g) | 0,05 à 0,25 | 0,25 à 1 |
| Basicité* | 5 à 6 % | 6 à 8 % |

| | | |
|---|---|---|
| * La basicité est exprimée par le pourcentage de potassium résiduel dans le produit. | | |

On note que la microporosité augmente dans un rapport pouvant atteindre une valeur de 1 à 5 lorsque les granulés de première pyrolyse sont traités comme dans l'exemple 1.

### Exemple 3 : Désodorisation d'une eau contenant des composés phénoliques

### 1er essai :

Une eau contenant des composés phénoliques présente une odeur désagréable.

Le traitement de cette eau par percolation sur la matière granulaire poreuse selon l'invention diminue la concentration des éléments polluants.

Débit d'eau : 0,5 à 1 v/v/h (volume/volume de matière/h)

**Tableau 1**

| | AVANT | APRES |
|---|---|---|
| D C O* | 400 mg/l | 80 mg/l |
| Phénols | 24 mg/l | 0 à 3 mg/l |

| | | |
|---|---|---|
| *D C O = demande chimique en oxygène | | |

### 2ème essai :

Un mélange constitué d'un condensat d'évaporation d'une eau de lavage de la laine et d'incondensables d'évaporation de la même eau de lavage, dans les proportions initiales de l'eau de lavage, c'est-à-dire 95/5 % en volume, est traité comme dans le 1er essai. Débit d'eau : 0,2 à 0,5 v/v/h.

**Tableau 1 bis**

| | AVANT | APRES |
|---|---|---|
| D C O | 1000 mg/l | 140 mg/l |
| Phénols | 14 mg/l | néant |

### Exemple 4 : Désodorisation de condensats d'évaporation des eaux de lavage de la laine.

Il est intéressant de désodoriser les condensats d'évaporation du lavage de la laine pour les réutiliser en lavage de la laine.

Le produit obtenu à l'exemple 1 est lavé à l'eau, à 70°C, pour en extraire les sels solubles.

### 1er essai :

On utilise successivement deux colonnes contenant chacune 150 cm³ de produit lavé à l'eau et séché. On fait diffuser l'eau condensée à travers le support, à une vitesse de 0,47 m/h, en courant ascendant. Le débit de passage est de 0,5 v/v/h soit 150 cm³/h.

Le volume journalier ainsi désodorisé est de 3,6 litres.

### 2ème essai :

Dans cet essai, on fait passer l'eau successivement sur trois colonnes contenant chacune 500 cm³ de produit obtenu selon l'exemple 1, lavé à l'eau et séché. La vitesse de passage est de 0,14 m/h en courant ascendant. Le débit de passage est de 0,2 v/v/h, soit 300 cm³/h.

Le volume journalier ainsi désodorisé est de 7,2 litres.

En fin de cycle, le support est réactivé par voie thermique au four entre 600 et 650°C, pendant 3 heures, à l'abri de l'air.

### Exemple 5 :

### 1er essai :

On procède comme dans l'exemple 4, 2ème essai.

On fait diffuser 18 litres de condensats d'évaporation sur le produit de l'exemple 1 traité comme indiqué à l'exemple 4, avant saturation du produit. On estime que le produit ou support est saturé quand, dans les colonnes, il ne fixe plus que 50 % de la demande chimique en oxygène (DCO) initiale de l'eau non traitée.

De plus, on évalue quantitativement la concentration en phénols au moyen de la 4-amino-antipyrine qui, en se condensant avec les phénols, développe une coloration.

Les résultats obtenus sont rassemblés dans le tableau 2.

**Tableau 2**

| VOLUME CONDENSATS DÉSODORISÉS* (l) | RAPPORT VOL. CONDENSATS/VOL. SUPPORT | D C O (mg/l) | PHÉNOLS (ppm) |
|---|---|---|---|
| 0 | -- | 400 | 24 |
| 2,1 | 7 | 15 | 0 |
| 5,1 | 17 | 20 | 0 |
| 10 | 33 | 20 | 0 |
| 15 | 50 | 80 | 3 |
| 18 | 60 | 180 | 16 |

| | | | |
|---|---|---|---|
| * Les mesures sont effectuées en cours de cycle, après désodorisation de 2,1 l, 5,1 l etc... | | | |

### 2ème essai :

On procède comme dans le 1er essai ci-dessus.

**Tableau 2 bis**

| VOLUME CONDENSATS DÉSODORISÉS* (l) | RAPPORT VOL. CONDENSATS/VOL. SUPPORT | D C O (mg/l) | PHÉNOLS (ppm) |
|---|---|---|---|
| 0 | -- | 1000 | 14 |
| 7,2 | 4,8 | 80 | 0 |
| 14,4 | 9,6 | 100 | 0 |
| 21,6 | 14,4 | 120 | 0 |
| 28,8 | 19,2 | 140 | 0 |
| 36,0 | 24,0 | 150 | 0 |
| 43,2 | 30,8 | 190 | 0 |
| 50,4 | 33,6 | 200 | 0 |

| | | | |
|---|---|---|---|
| * Même remarque que pour le tableau 2. | | | |

Une régénération thermique en milieu inerte permet la réutilisation du support en traitement des condensats par percolation, et ceci tant que la réactivation thermique est possible.

### Exemple 6 : Désodorisation de condensats de revaporisation au moyen de vapeur d'eau (stripping)

On procède comme dans l'exemple 4, 1er essai et l'exemple 5, 2ème essai.

Les résultats obtenus sont rassemblés dans le tableau 3.

**Tableau 3**

| VOLUME CONDENSATS DÉSODORISÉS* (l) | RAPPORT VOL. CONDENSATS/VOL. SUPPORT | D C O (mg/l) | PHÉNOLS (ppm) |
|---|---|---|---|
| 0 | -- | 140 | 16 |
| 2,1 | 7 | 6 | 0 |
| 5,1 | 17 | 7 | 0 |
| 10 | 33 | 10 | 0 |
| 15 | 55 | 32 | 5 |
| 18 | 60 | 70 | 7 |

| | | | |
|---|---|---|---|
| * Même remarque que pour le tableau 2. | | | |

### Exemple 7 : Neutralisation de l'acidité des corps gras.

De la matière granulaire poreuse selon l'invention, obtenue par une deuxième pyrolyse à 750°C maximum pendant 50 minutes, est calcinée en atmosphère oxydante à 400°C, pendant 8 heures, pour augmenter sa basicité en surface.

Avec la matière granulaire poreuse ainsi traitée, on peut obtenir, de façon concomitante, une neutralisation des acides gras et une accélération de la décomposition des peroxydes.

De la suintine est mise en solution hydroalcoolique additionnée de peroxyde d'hydrogène à 130 volumes. La solution est ensuite diffusée en courant ascendant à travers la matière granulaire traitée comme indiqué ci-dessus, à un débit de 0,1 v/v/h.

On mesure, avant et après le traitement, l'acidité libre, l'indice de peroxyde et la couleur Lovibond de la suintine.

La mesure de l'acidité libre effectuée consiste à exprimer l'acidité en pourcentage d'acide oléïque présent dans la substance à analyser. C'est une forme d'expression de l'indice d'acide.

L'indice de peroxyde est donné par le nombre, exprimé en milliéquivalents, d'oxygène actif contenu dans 1000 g de substance.

La mesure de la couleur Lovibond est une mesure de couleur d'une huile ou d'une graisse fondue. C'est une mesure comparative qui est effectuée sur un comparateur Lovibond, de la façon suivante. On place la suintine fondue dans une cellule de 0,635 cm (1/4 de pouce). La cellule est placée dans le comparateur et on lui associe des plaques colorées (en rouge, bleu et jaune) ou filtres de façon à obtenir la même couleur que celle de la suintine. Quand ce résultat est obtenu, on exprime la couleur par les numéros des filtres utilisés (par exemple jaune 20).

Dans le cas présent, on utilise uniquement la valeur ou numéro du filtre jaune.

Les résultats sont exprimés comme suit : couleur Lovibond, cellule 1/4 de pouce, jaune = par exemple 20.

Les résultats de ces trois mesures sont rassemblés dans le tableau 5 qui suit.

**Tableau 5**

| | Acidité libre (%) | Indice de peroxyde | Couleur Lovibond (jaune) |
|---|---|---|---|
| Avant | 4 | 90 à 12 | > 80 |
| Après | 0,2 | 40 à 8 | 20 |

### Exemple 8 : Adoucissement d'une coupe pétrolière contenant des composés soufrés.

Une coupe pétrolière (point d'ébullition 135 à 250°C) contenant 120 ppm de composés soufrés (mercaptans) est adoucie en utilisant d'une part, la matière granulaire de première pyrolyse qui absorbe peu de catalyseur (environ 2,5 kg/cm³ de phtalocyanine de cobalt) et, d'autre part, la matière granulaire selon l'invention obtenue par pyrolyse pendant environ 1h à une température maximum de 700°C qui absorbe beaucoup plus de catalyseur (environ 4,7 kg/cm³ de phtalocyanine de cobalt).

On constate qu'à résultat égal (teneur en mercaptans des effluents comprise entre 5 et 10 ppm), le volume de coupe pétrolière traité par heure est doublé avec les granulés selon l'invention, en particulier grâce à une augmentation de la quantité de catalyseur qui peut être fixée sur ces granulés.

## Revendications

1. Matière granulaire poreuse comprenant du carbone, de la silice, des sels minéraux solubles dans l'eau et des sels minéraux insolubles dans l'eau, caractérisée en ce qu'elle ne se délite pas en présence d'eau et présente :
- une granulométrie dans la gamme d'environ 1 à 5 mm ;
- une résistance à l'écrasement, ou résistance mécanique, dans la gamme de 0,75 à 1 MPa ;
- une densité comprise entre 0,7 et 0,8 ;
- une surface spécifique BET comprise entre 100 et 200 m²/g ;
- un volume microporeux compris entre 0,25 et 1 cm³/g ; et
- une teneur en carbone de 8 à 11 % en poids, le complément étant essentiellement constitué d'une matrice minérale à caractère basique, comprenant une phase cristalline d'aluminosilicates insolubles.

2. Matière granulaire poreuse selon la revendication 1, caractérisée en ce qu'elle présente une granulométrie dans la gamme de 1 à 3 mm, avantageusement de 1 à 2 mm.

3. Matière granulaire poreuse selon la revendication 2, caractérisée en ce qu'elle présente :
- une résistance à l'écrasement, ou résistance mécanique, comprise entre 0,75 et 0,95 MPa ;
- une surface spécifique BET comprise entre 160 et 200 m²/g ; et
- un pH, mesuré sur les eaux de lavage, supérieur à 11.

4. Matière granulaire poreuse selon l'une quelconque des revendications 1 à 3, caractérisée en ce qu'elle présente une teneur en silice de l'ordre de 45 % en poids.

5. Procédé pour la fabrication de la matière granulaire poreuse selon la revendication 1 ou 2, éventuellement en combinaison avec la revendication 4, caractérisé en ce qu'il comprend essentiellement les étapes consistant à :
1. se procurer une matière essentiellement minérale (1), ayant ou non une granulométrie dans la gamme d'environ 1 à 5 mm, de préférence dans la gamme de 1 à 3 mm, avantageusement de 1 à 2 mm, et obtenue par concentration d'eaux de lavage de la laine jusqu'à une teneur en matière sèche d'environ 70 %, pyrolyse du concentrat résultant à une température comprise entre 400 et 600°C, à l'abri de l'air et refroidissement ;
2. soumettre si nécessaire cette matière à des opérations de broyage, compactage, granulation et tamisage pour disposer de granulés ayant une granulométrie dans la gamme d'environ 1 à 5 mm, de préférence dans la gamme de 1 à 3 mm, avantageusement de 1 à 2 mm ;
3. soumettre la matière essentiellement minérale de départ avec une granulométrie dans la gamme d'environ 1 à 5 mm, de préférence dans la gamme 1 à 3 mm, avantageusement de 1 à 2 mm, ou les granulés obtenus à l'étape 2. à une seconde pyrolyse (6), sous atmosphère non oxydante, à une température qui est portée progressivement d'une valeur dans la gamme de 250 à 350°C à une valeur dans la gamme de 700 à 950°C, pendant une durée totale de 15 à 60 minutes ; et
4. refroidir (14, 15) les granulés ainsi obtenus à l'abri de l'air et dans des conditions telles qu'ils ne subissent pas de choc thermique.

6. Procédé selon la revendication 5, caractérisé en ce que, lors du compactage, on ajoute du brai de pétrole ou de houille, en une proportion de 5 à 10 % en poids par rapport au poids de la poudre obtenue à l'issue du broyage, et/ou des boues contenant des métaux ou des sels de métaux.

7. Procédé selon la revendication 5 ou 6, caractérisé en ce que la seconde pyrolyse est effectuée dans un four rotatif (6) muni de parois réfractaires (63).

8. Procédé selon l'une quelconque des revendications 5 à 7, caractérisé en ce que l'atmosphère dans le four est réductrice.

9. Procédé selon l'une quelconque des revendications 5 à 8, caractérisé en ce que les granulés sont refroidis dans du sable fin ou, de préférence, dans un tube (14) à double enveloppe (15) dans laquelle circule de l'eau froide.

10. Procédé selon l'une quelconque des revendications 5 à 9 pour la fabrication de la matière granulaire poreuse selon la revendication 3, éventuellement en combinaison avec la revendication 4, caractérisé en ce que la seconde pyrolyse (6) est effectuée à une température qui est portée progressivement d'une valeur dans la gamme de 250 à 350°C à une valeur dans la gamme de 700 à 750°C.

11. Utilisation de la matière granulaire poreuse selon l'une quelconque des revendications 1 à 4 pour purifier des liquides.

12. Utilisation de la matière granulaire poreuse selon l'une quelconque des revendications 1 à 4 comme catalyseur dans des réactions d'oxydation.

13. Utilisation de la matière granulaire poreuse selon l'une quelconque des revendications 1 à 4 comme support de catalyseur ou pour la fabrication d'un tel support.

14. Utilisation de la matière granulaire poreuse selon la revendication 3, éventuellement en combinaison avec la revendication 4, pour fabriquer un catalyseur composite utilisable en pétrochimie.

## Claims

1. Porous, granular material comprising carbon, silica, water-soluble mineral salts and water-insoluble mineral salts, characterized in that it does not disintegrate in the presence of water and has:
- a particle size in the range of approximately 1 to 5 mm;
- a crushing strength, or mechanical strength, in the range of 0.75 to 1 MPa;
- a density of between 0.7 and 0.8;
- a BET specific surface area of between 100 and 200 m²/g;
- a microporous volume of between 0.25 and 1 cm³/g; and
- a carbon content of 8 to 11 weight %, the balance being essentially made up by a mineral matrix of a base nature, comprising a crystalline phase of insoluble aluminosilicates.

2. Porous, granular material according to claim 1, characterized in that it has a particle size ranging from 1 to 3 mm, advantageously from 1 to 2 mm.

3. Porous, granular material according to claim 2, characterized in that shows:
- a crushing strength, or mechanical strength, of between 0.75 and 0.95 MPa;
- a BET specific surface area of between 160 and 200 m²/g; and
- a pH value, measured for the washing waters, of over 11.

4. Porous, granular material according to claim 1 to 3, characterized in that it has a silica content in the order of 45 weight %.

5. Process for the manufacture of the porous, granular material according to claims 1 or 2, possibly combined with the claim 4, characterized in that it essentially comprises the steps of:
1. obtaining an essentially mineral material (1), having, or having not, a particle size ranging from approximately 1 to 5 mm, preferably from 1 to 3 mm, and, advantageously, from 1 to 2 mm, obtained by concentrating wool scouring waters to obtain a dry matter content of approximately 70%, pyrolysis of the resulting concentrate at a temperature of between 400 and 600°C, with protection from air and cooling;
2. subjecting this material, if necessary, to grinding, compacting, granulating and screening operations to obtain a granulate having a particle size ranging from approximately 1 to 5 mm, preferably from 1 to 3 mm and, advantageously, from 1 to 2 mm;
3. subjecting the essentially mineral starting material with a particle size ranging from approximately 1 to 5 mm, preferably from 1 to 3 mm and, advantageously, from 1 to 2 mm, or the granulate obtained in step 2, to a second pyrolysis (6), in a non-oxidizing atmosphere, at a temperature which is gradually increased from a value ranging from 250 to 350°C to a value ranging from 700 to 950°C, for a total duration of 15 to 60 minutes; and
4. cooling (14, 15) the granulate thus obtained, with protection from air, and under conditions such that it is not subjected to thermal shock.

6. Process according to claim 5, characterized in that, at the time of compacting, petroleum pitch or coal tar pitch, in a proportion of 5 to 10 weight % in relation to the weight of the powder obtained following grinding, and/or sludges containing metals or metal salts are added.

7. Process according to claim 5 or 6, characterized in that the second pyrolysis is carried out in a rotary furnace (6) fitted with refractory walls (63).

8. Process according to any one of claims 5 to 7, characterized in that the atmosphere in the furnace is a reducing atmosphere.

9. Process according to any one of claims 5 to 8, characterized in that the granulate is cooled in fine sand or, preferably, in a tube (14) having a double jacket (15) through which cold water circulates.

10. Process according to any one of claims 5 to 9 for the manufacture of the porous, granular material according to claim 3, possibly combined with the claim 4, characterized in that the second pyrolysis (6) is carried out at a temperature which is gradually increased from a value ranging from 250 to 350°C to a value ranging from 700 to 750°C.

11. Use of the porous, granular material according to any one of claims 1 to 4 for purifying liquids.

12. Use of the porous, granular material according to any one of claims 1 to 4 as a catalyst in oxidation reactions.

13. Use of the porous, granular material according to any one of claims 1 to 4 as a catalyst support or for the manufacture of such a support.

14. Use of the porous, granular material according to claim 3, possibly combined with the claim 4, for the manufacture of a composite catalyst usable in petrochemistry.

## Patentansprüche

1. Poröses granuläres Material, umfassend Kohlenstoff, Silicium, wasserlösliche und wasserunlösliche Mineralsalze, dadurch **gekennzeichnet,** daß es sich in Anwesenheit von Wasser nicht auflöst und:
- eine Korngrößenverteilung im Bereich von etwa 1 bis 5 mm;
- einen Reibungswiderstand oder mechanischen Widerstand im Bereich von 0,75 bis 1 MPa;
- eine Dichte zwischen 0,7 und 0,8;
- eine spezifische BET-Oberfläche zwischen 100 und 200 m²/g;
- ein mikroporöses Volumen zwischen 0,25 und 1 cm³/g; und
- einen Kohlenstoffgehalt von 8 bis 11 Gew.-% besitzt, wobei der Rest im wesentlichen aus einer Mineralmatrix mit basischem Charakter besteht, die eine kristalline Phase aus unlöslichen Aluminiumsilicaten umfaßt.

2. Poröses granuläres Material nach Anspruch 1, dadurch **gekennzeichnet,** daß es eine Korngrößenverteilung im Bereich 1 bis 3 mm, bevorzugt 1 bis 2 mm besitzt.

3. Poröses granuläres Material nach Anspruch 2, dadurch **gekennzeichnet,** daß es:
- einen Reibungswiderstand oder mechanischen Widerstand zwischen 0,75 und 0,95 MPa;
- eine spezifische BET-Oberfläche zwischen 160 und 200 m²/g; und
- einen in Waschwässern gemessenen pH-Wert von größer 11 besitzt.

4. Poröses granuläres Material nach einem der Ansprüche 1 bis 3, dadurch **gekennzeichnet,** daß es einen Siliciumgehalt im Bereich von 45 Gew.-% besitzt.

5. Verfahren zur Herstellung des porösen granulären Materials nach Anspruch 1 oder 2, gegebenenfalls in Kombination mit Anspruch 4, dadurch **gekennzeichnet,** daß es im wesentlichen die folgenden Stufen umfaßt:
1. Besorgung eines im wesentlichen mineralischen Materials (1) mit oder ohne Korngrößenverteilung im Bereich von etwa 1 bis 5 mm, bevorzugt im Bereich von 1 bis 3 mm, vorteilhafterweise von 1 bis 2 mm und Erhalten durch Einengen von Schlackenauswaschungen bis zu einem Feststoffgehalt von etwa 70%, Pyrolyse des so erhaltenen Konzentrats bei einer Temperatur zwischen 400 und 600°C ohne Luftzutritt und Abkühlung;
2. gegebenenfalls Unterwerfen dieses Materials den Arbeitsschritten der Zerkleinerung, der Kompaktierung, der Granulation und des Siebens, um Körnchen mit einer Korngrößenverteilung im Bereich von etwa 1 bis etwa 5 mm, bevorzugt im Bereich von 1 bis 3 mm, vorteilhafterweise von 1 bis 2 mm zu besitzen;
3. Unterwerfen des im wesentlichen mineralischen Ausgangsmaterials mit einer Korngrößenverteilung im Bereich von etwa 1 bis 5 mm, bevorzugt im Bereich von 1 bis 3 mm, vorteilhafterweise von 1 bis 2 mm, oder der in Stufe 2. erhaltenen Körnchen einer zweiten Pyrolyse (6) unter nicht oxidierender Atmosphäre bei einer Temperatur, die stufenweise von einem Wert im Bereich von 250 bis 350°C auf einen Wert im Bereich von 700 bis 950°C über eine Gesamtdauer von 15 bis 60 Minuten gebracht wird; und
4. Abkühlen (14, 15) der so erhaltenen Körnchen ohne Luftzutritt und unter Bedingungen, daß sie keinen thermischen Schock erhalten.

6. Verfahren nach Anspruch 5, dadurch **gekennzeichnet,** daß man während der Kompaktierung Erdöl- oder Steinkohleteerpech in einem Verhältnis von 5 bis 10 Gew.-%, bezogen auf das Gewicht des nach der Zerkleinerung erhaltenen Pulvers, und/oder der Metall oder Metallsalze enthaltenden Schlacke zusetzt.

7. Verfahren nach Anspruch 5 oder 6, dadurch **gekennzeichnet,** daß die zweite Pyrolyse in einem Drehofen (6) mit feuerfesten Wänden (63) durchgeführt wird.

8. Verfahren nach einem der Ansprüche 5 bis 7, dadurch **gekennzeichnet,** daß die Atmosphäre in dem Ofen reduzierend ist.

9. Verfahren nach einem der Ansprüche 5 bis 8, dadurch **gekennzeichnet,** daß die Körnchen in Feinsand oder bevorzugt in einem doppelt ummantelten (15) Rohr (14), in dem kaltes Wasser zirkuliert, abgekühlt werden.

10. Verfahren nach einem der Ansprüche 5 bis 9 zur Herstellung von porösem granulärem Material nach Anspruch 3, gegebenenfalls in Kombination mit Anspruch 4, dadurch **gekennzeichnet,** daß die zweite Pyrolyse (6) bei einer Temperatur durchgeführt wird, die stufenweise von einem Wert im Bereich von 250 bis 350°C auf einen Wert im Bereich von 700 bis 750°C gebracht wird.

11. Verwendung des porösen granulären Materials nach einem der Ansprüche 1 bis 4 zur Reinigung von Flüssigkeiten.

12. Verwendung des porösen granulären Materials nach einem der Ansprüche 1 bis 4 als Katalysator für Oxidationsreaktionen.

13. Verwendung des porösen granulären Materials nach einem der Ansprüche 1 bis 4 als Träger für einen Katalysator oder zur Herstellung eines derartigen Trägers.

14. Verwendung des porösen granularen Materials nach Anspruch 3, gegebenenfalls in Kombination mit Anspruch 4, zur Herstellung eines zusammengesetzten Katalysators, der in der Petrochemie verwendbar ist.
